# DEMANDE DE BREVET EUROPEEN

(11) **EP 2 463 973 A1**
(43) Date de publication de la demande: **13.06.2012**
(21) Numéro de dépôt: 11306641.9
(22) Date de dépôt: 12.12.2011
(51) Int. Cl.: H02G 3/04, H02G 3/06

(54) **Système de cheminement de câbles électrifié**

(30) Priorité: 13.12.2010 FR 1060401
(71) Demandeur: CQFD Composites, 69100 Villeurbanne (FR)
(72) Inventeur: Chauzu, Franck, 67210 OBERNAI (FR)
(74) Mandataire: Ocvirk, Philippe

(57) **Abrégé**

Le système de cheminement de câbles comporte une structure porteuse rigide qui comprend des premiers éléments de structure longitudinaux (12, 13) et des deuxièmes éléments de structure (11,21) en matériau électriquement isolant reliant mécaniquement les éléments de structure longitudinaux. Il comporte au moins deux conducteurs électriques (3) s'étendant parallèlement selon la direction des éléments de structure longitudinaux et séparés par au moins des portions desdits deuxièmes éléments de structure, de manière à isoler les conducteurs électriques l'un de l'autre, et des moyens de connexion électrique (110, 210) sont disposés le long du cheminement de câble, de manière à permettre le raccordement d'un appareillage électrique (5) entre les conducteurs électriques.

## Description

La présente invention concerne un système de cheminement de câbles, pour des câbles d'alimentation électrique, de télécommunications, ou autres conduits similaires, et plus particulièrement un tel système adapté pour offrir des points de connexion électriques en différents points sur sa longueur.

Il est déjà bien connu, en particulier dans des installations industrielles, d'utiliser des supports, communément appelés chemins de câbles ou échelles à câbles, pour guider et supporter des câbles électriques, de télécommunication, ou même des conduits de transport de fluides, généralement sur de grandes longueurs, et permettre de regrouper dans un même support plusieurs câbles ou conduits disposés parallèlement. A cette fin, ces systèmes de cheminement de câbles sont classiquement formés par l'assemblage but à bout d'éléments de support ayant une section transversale en forme de U. Par la suite, on utilisera également l'expression «chemin de câbles» pour désigner tous les types d'éléments de support utilisés pour réaliser de tels cheminements de câbles ou autres conduits.

Actuellement, ces chemins de câbles sont le plus souvent réalisés en acier pour des raisons économiques.

Plus particulièrement, les chemins de câbles peuvent être de deux types :
- les systèmes dit «fermés», dans lesquels les parois des chemins de câbles sont essentiellement continues, par exemple sous forme de tôle pliée appelée « dalle », ou de profilés en matière plastique extrudée ou en matériau composite pultrudé,
- les systèmes dits «ouverts». Dans cette catégorie, on trouve notamment les échelles à câbles, les chemins de câbles de type treillis métallique, encore appelés systèmes « fil », formés de fils métalliques assemblés entre eux généralement par soudure, et aussi les chemins de câbles formés par assemblages d'éléments structurels allongés constituant les longerons latéraux, généralement en matériau électriquement isolant, reliés par des barreaux transversaux également isolants, ces éléments étant généralement réalisés en matière plastique (telle que du PA6, renforcé au non) ou composites (Polyester ou polyamide renforcé de fibres de verre continues), tels que ceux qui sont décrits par exemple dans FR2917912, FR2917913, FR2920600.

Par ailleurs, il existe aussi des systèmes de rails électrifiés offrant des points de connexion préfabriqués. Ces systèmes sont particulièrement utilisés en industrie, là où les besoins en points de connexion sont nombreux et susceptibles d'évoluer dans le temps. Le prix de ces solutions est sans commune mesure avec celui des cheminements de câbles. Ces derniers systèmes ne sont pas destinés à assurer le portage des câbles, et ne sont donc pas conçus de manière à pouvoir accueillir des pluralités de câbles disposés côte à côte, alors que les chemins de câbles qui viennent d'être décrits sont eux particulièrement destinés à porter de tels ensembles de câbles électriques ou de communication.

La présente invention a pour but de proposer des chemins de câbles destinés en premier lieu à supporter des ensembles de câbles juxtaposés, et qui puissent également agir comme un rail électrifié permettant d'y connecter directement divers appareils électriques en divers points répartis sur la longueur du cheminement de câble.

Avec ces objectifs en vue, l'invention a pour objet un système de cheminement de câbles, comportant une structure porteuse rigide qui comprend des premiers éléments de structure longitudinaux et des deuxièmes éléments de structure, reliant mécaniquement les éléments de structure longitudinaux, caractérisé en ce qu'il comporte au moins deux conducteurs électriques s'étendant parallèlement selon la direction des éléments de structure longitudinaux et séparés par au moins des portions desdits deuxièmes éléments de structure réalisés en matériau électriquement isolant, de manière à isoler les conducteurs électriques l'un de l'autre, et en ce que des moyens de connexion électrique sont disposés le long du cheminement de câble, de manière à permettre le raccordement d'un appareillage électrique entre les conducteurs électriques.

On notera que lesdits deuxièmes éléments de structure sont typiquement des éléments de structures transversaux, sous forme de barreaux ou similaires, mais peuvent aussi être par exemple des plaques s'étendant entre les éléments longitudinaux sur toute la longueur de ceux-ci, ou sur des portions de longueur de ceux-ci.

Le système de cheminement de câbles selon l'invention permet donc à la fois de supporter des câbles, et d'assurer une connexion électrique entre des appareillages électriques raccordés directement sur le chemin de câble. Ces appareillages sont typiquement d'une part une source d'énergie électrique et d'autre part au moins un récepteur électrique, par exemple une lampe, connecté sur le cheminement de câble à distance de la source, ou une pluralité de récepteurs répartis le long du cheminement de câble. Le système selon l'invention peut donc servir à l'alimentation électrique de tous types de récepteurs susceptibles d'y être connecté, mais il peut aussi être utilisé pour transmettre divers signaux de commande ou de contrôle entre des appareils qui y sont connectés.

Bien que les éléments de structure longitudinaux puissent ne pas être en matériau électriquement isolant, la structure porteuse est préférentiellement réalisée partiellement ou entièrement, et bien sûr à l'exception des conducteurs électriques, en matière plastique ou composite. Elle peut être réalisée par exemple sous forme d'une échelle comportant deux longerons reliés par des barreaux, ou d'une structure ouverte de section générale en forme de U, formée de tiges longitudinales reliées entre elles par des pièces de liaisons transversales ou des barreaux, ou encore d'un profilé de section en U à parois pleines, les conducteurs électriques constituant une partie intégrante de la structure porteuse, non dissociable de celle-ci.

Préférentiellement, au moins certains des conducteurs électriques sont logés dans un ou plusieurs desdits éléments longitudinaux, réalisés en matériau électriquement isolant, de sorte que ces conducteurs électriques sont ainsi totalement enrobés de matière isolante, cette disposition pouvant s'appliquer quelle que soit la forme de réalisation de la structure porteuse. Par exemple, lesdits éléments longitudinaux peuvent être des éléments de plaques formant le fond et/ou les côtés d'une structure de section générale en forme de U comme indiqué ci-dessus.

Préférentiellement encore, les éléments de structure longitudinaux sont des tiges longitudinales en matériau électriquement isolant dans lesquelles les conducteurs électriques sont logés. Typiquement le cheminement de câble peut alors être réalisé sous forme d'une structure ouverte du type indiqué ci-dessus, dans laquelle les conducteurs électriques sont positionnés dans au moins deux des tiges longitudinales sur toutes la longueur de ces tiges, les tiges longitudinales étant reliées mécaniquement par des pièces de liaison transversales. On notera que, en variante, une même tige pourrait aussi comporter plusieurs conducteurs électriques isolés les uns des autres.

Selon un mode de réalisation particulier, la structure porteuse comporte deux longerons reliés par des éléments de structure transversaux, au moins un des longerons comprenant au moins deux éléments de structure longitudinaux comportant des conducteurs électriques. Cette configuration présente l'avantage de pouvoir utiliser des moyens de connexion électrique communs identiques pour toutes les largeurs de cheminements de câbles, puisque tous les longerons ont alors les mêmes dimensions transversales, quelle que soit la largeur du cheminement de câble.

Dans une installation standard utilisant des cheminements de câble de type ouvert et présentant des changements de direction, les tiges formant le fond du U sont généralement moins découpées que les tiges formant le bord supérieur des longerons. Aussi, selon un autre mode de réalisation, la structure porteuse a une section transversale en forme de U et les éléments de structure longitudinaux comportant des conducteurs électriques sont situés dans le fond de ce U. Dans cette variante de réalisation, il y a donc moins de jonctions électriques à rétablir entre les tiges qui auront dû être coupées, et cette variante peut donc être plus économique en réduisant le nombre de dispositif de jonctions à utiliser.

On notera incidemment que le nombre de conducteurs électriques disposés en parallèles peut être de deux, ou trois ou plus encore, selon les besoins, et qu'il peut donc aussi être plus facile de loger plus de conducteurs répartis sur la largeur du fond du chemin de câble que sur la hauteur des longerons.

Selon une disposition particulièrement avantageuse, les caractéristiques mécaniques des conducteurs électriques, et leurs caractéristiques dimensionnelles et notamment l'aire de leur section, sont déterminées de manière à augmenter la résistance mécanique de la structure porteuse. Les conducteurs électriques participent ainsi significativement au renforcement et à la rigidité de la structure isolante du cheminement de câbles. Ce mode de réalisation permet à la fois de réduire la quantité des matières plastiques ou composites utilisées dans le cheminement de câbles, qui sont généralement plus onéreuses que les métaux utilisés comme conducteur électrique, ainsi que, par une section métallique accrue, limiter les pertes par effet Joule dans les conducteurs électriques. L'homme du métier pourra aisément déterminer, à partir des caractéristiques mécaniques et électriques des matériaux utilisés, les caractéristiques dimensionnelles des conducteurs électriques et des autres éléments de la structure porteuse de manière à obtenir, par exemple à section transversale équivalente de l'ensemble des éléments de la structure porteuse, la plus grande résistance mécanique possible.

Il a été considéré précédemment que les conducteurs électriques étaient isolés électriquement dans des tiges en matériau isolant formant les éléments de structure longitudinaux. Il est cependant aussi possible d'utiliser au moins un des conducteurs électrique dénudé, par exemple dans un mode de réalisation économique pouvant être utilisé en basse tension, dans la mesure où il demeure isolé des autres éléments conducteurs par les deuxièmes éléments de structure en matériau isolant.

Pour assurer la continuité électrique sur toute la longueur d'un cheminement de câble formé de plusieurs tronçons, il est prévu des moyens de jonction à continuité électrique pour relier électriquement les extrémités des tiges longitudinales de tronçons de structure porteuse. Ces moyens de jonction à continuité électrique, peuvent typiquement être de type à manchon tubulaire, constitués par un corps isolant et munis d'un dispositif assurant par l'intérieur du manchon une continuité électrique entre un élément conducteur d'un tronçon de cheminement de câbles et l'élément conducteur du tronçon suivant disposé bout à bout du précédent. Ces moyens de jonction permettent de transformer le cheminement de câbles en un support électrifié circulant de manière continue dans une grande partie d'une installation.

Selon une disposition complémentaire, les moyens de jonction à continuité électrique présentent une partie médiane déformable. Cette partie déformable des moyens de jonction permet, à la manière d'une articulation, de réaliser, lors de la pose du cheminement de câbles, des changements de directions entre des portions adjacentes de tiges comportant des conducteurs électriques, sans perdre la continuité électrique.

Selon une autre disposition particulière, les moyens de connexion électrique sont reliés électriquement aux conducteurs électriques logés dans les éléments longitudinaux par des poinçons traversant la matière isolante desdits éléments. De tels systèmes de connexion électrique, de types par ailleurs connus de l'homme du métier, par exemple pour des connexions sur des lignes d'alimentation d'éclairage en basse tension, assurent le contact électrique par un poinçonnage susceptible de perforer localement la couche isolante pour venir en contact avec le conducteur électrique, et permettent de former entre deux éléments conducteurs des bornes de raccordement électrique pour y connecter des équipements électriques et notamment des sources lumineuses.

Préférentiellement, les moyens de connexion électrique sont formés sur certains des deuxièmes éléments de structure reliant les éléments de structure longitudinaux comportant des conducteurs électriques, c'est-à-dire en particulier sur les éléments de liaison reliant les tiges longitudinales d'un longeron, ou sur les barreaux, ou autres éléments de structure transversaux similaires, reliant les longerons du cheminement de câbles de section en U.

Les moyens de connexion électrique peuvent comporter plusieurs groupes de bornes de raccordement pour raccorder plusieurs appareillages électriques sur le même moyen de connexion. Les dites bornes peuvent être des orifices permettant de venir y insérer un branchement de type prise électrique, ou des connexions à ressort permettant de venir y insérer en prise rapide des conducteurs électriques dénudés, ou encore des systèmes de type rails d'alimentation permettant d'y raccorder un appareillage de manière coulissante tout en étant protégé des contacts directs et uniquement accessible par le dispositif de raccordement prévu à cet effet.

D'autres caractéristiques et avantages apparaîtront dans la description qui va être faite d'un exemple de cheminement de câbles conforme à l'invention.

On se reportera aux dessins annexés dans lesquels :
- la figure 1 est une vue générale en perspective d'un élément de cheminement de câbles conforme à l'invention, présentant de plus un dénivelé,
- la figure 2 est une vue en coupe transversale de l'élément de cheminement de câbles,
- la figure 3 est une vue en perspective d'un tronçon de cheminement de câbles comportant différents types de moyens de connexion électrique,
- la figure 4 est une vue en coupe longitudinale d'une jonction à continuité électrique pour relier électriquement les extrémités des tiges longitudinales comportant un conducteur électrique,
- la figure 5 est une vue en coupe longitudinale d'une telle jonction à continuité électrique déformable, pour permettre un changement de direction entre des portions adjacentes de tiges comportant des conducteurs électriques.

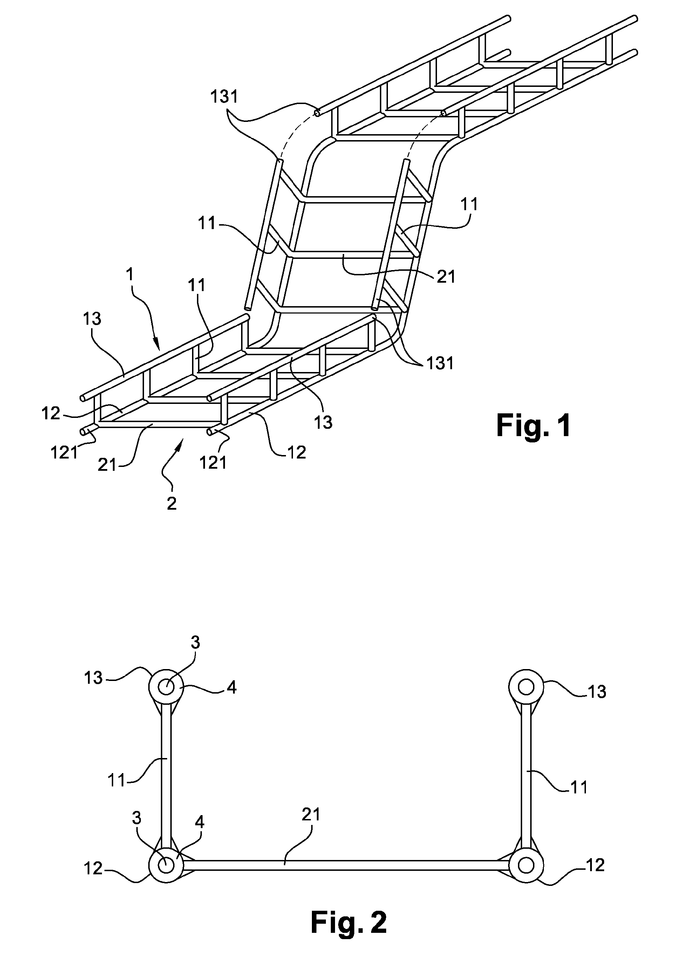

L'élément de chemins de câbles représenté figure 1 comporte une structure porteuse, qui peut être du type décrit par exemple dans FR2917912, FR2917913, FR2920600 précités, comportant des longerons latéraux 1 formés d'éléments de liaison transversaux, ou entretoises 11, reliant des tiges longitudinales 12 et 13. La structure porteuse comporte aussi un fond 2 formé par des éléments de structure transversaux, tels que des traverses 21, qui relient les tiges longitudinales 12 inférieures des deux longerons, pour former une structure ayant une section en forme de U, visible figure 2. Les entretoises 11 et les traverses 21 sont réparties régulièrement sur la longueur de l'élément de chemin de câbles, les traverses assurant le supportage des câbles.

Les barres longitudinales 12 et 13 sont réalisées en matière composite, par exemple en Polyamide 6 (PA6) renforcé de fibres minérales (fibres de verre, de basalte, etc.) ou de fibres naturelles continues (fibres de lin, de chanvre, etc.) dans des taux pouvant varier, par exemple, entre 20% et 85% en masse du composite, et comportent une âme 3 faite d'un fil électriquement conducteur qui se trouve donc entouré par la matière composite 4. Le fil électriquement conducteur peut être en cuivre ou aluminium, ou encore en acier, traité anticorrosion ou non, ce qui peut alors permettre de renforcer de manière plus importante la résistance mécanique générale du cheminement de câble.

Les entretoises 11 et les traverses 21 sont en matière plastique, renforcée ou non de fibres courtes par exemple, et liées aux dites tiges par collage, soudage, ou tout autre moyen de liaison, comme par exemple indiqué dans les documents de brevets précités.

Typiquement, les tiges peuvent avoir un diamètre de 6 à 10 mm, et le fil électriquement conducteur de 3 à 5 mm. Ces tiges ne sont pas limitées à des sections circulaires mais peuvent être de formes quelconques (carrée, ovale, etc.)

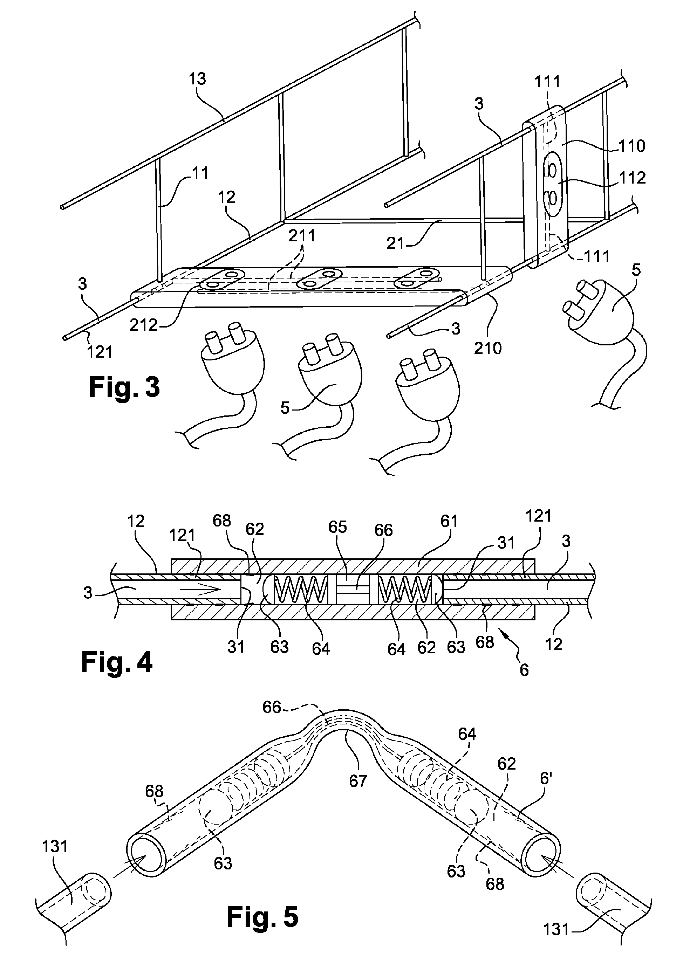

La figure 3 illustre schématiquement différentes possibilités d'assurer la connexion de divers appareillages électriques sur le cheminement de câble par des moyens de connexion électrique selon l'invention, les éléments de structure longitudinaux étant typiquement des tiges longitudinales 12 et 13 en matériau isolant intégrant chacune un conducteur électrique 3, mais pouvant aussi être des conducteurs électriques non enrobés d'isolant, ou aussi des éléments de structure entièrement en matière isolante. Dans tous les cas les éléments transversaux 11 et 21 sont en matériau électriquement isolant, ou au moins conçus de manière à assurer une isolation électrique entre les conducteurs 3.

La traverse 210 comporte deux fils conducteurs 211, disposés en parallèle, isolés l'un de l'autre, et noyés dans le matériau isolant, et connectés électriquement respectivement aux conducteurs électriques 3 des deux tiges 12, par exemple par des systèmes à poinçonnage à travers la matière isolante 4, précédemment mentionnés et connus de l'homme du métier. Dans l'exemple présenté, trois groupes de bornes de connexion 212 sont formés sur la traverse, ici sous forme de bornes connectées respectivement sur les fils 211, chacun des groupes étant adapté pour y brancher des prises de courant classiques 5, de préférence par le dessous du chemin de câble.

L'entretoise 110 comporte, de manière similaire, deux fils conducteurs 111, isolés l'un de l'autre, noyés dans le matériau isolant, et connectés électriquement respectivement aux conducteurs électriques 3 des tiges 12 et 13. Des bornes de connexion 112 sont formées sur l'entretoise, sous forme de bornes connectées sur les fils 111 et adaptées pour y brancher une prise de courant classique 5, de préférence par l'extérieur du chemin de câble.

La figure 4 illustre une jonction à continuité électrique 6 pour relier électriquement les extrémités 121 des tiges longitudinales 12 ou 13 comportant un conducteur électrique 3. La jonction 6 comporte un corps tubulaire 61 rigide comportant deux chambres 62 de diamètre adapté pour y recevoir sans jeu les extrémités des tiges 12. Des plots 63 de contact électriques sont montés coulissants dans les chambres 62, selon la direction axiale de la jonction, et des ressorts 64 sont disposés entre les plots 63 et une paroi centrale 65 séparant les chambres, de manière à appliquer en pression les plots 63 sur les extrémités frontales 31 des conducteurs électriques 3 des tiges 12, lorsque les dites tiges sont insérées dans les chambres 62 dans leur position finale, représentée sur la partie droite de la figure. Une pièce de liaison conductrice 66 traverse la paroi 65 de manière à assurer une liaison électrique entre les deux ressorts 64. Ainsi, les extrémités des tiges 12 sont reliées électriquement via les plots 63, les ressorts 64 et la pièce de liaison 66, et la continuité électrique est ainsi assurée automatiquement sur toute la longueur du cheminement de câble dès que les tiges 12 ou 13 sont assemblées bout à bout par les jonctions 6.

La figure 5 illustre une jonction à continuité électrique 6' adaptée particulièrement pour relier électriquement les extrémités 131 de tiges longitudinales 13 qui ne sont pas en alignement, par exemple lorsque ces tiges ont été coupées pour permettre des changements de direction du cheminement de câbles, comme illustré sur la figure 1. La jonction 6' est similaire à la jonction 6 précédemment décrite mais s'en distingue essentiellement par le fait que sa partie médiane 67 est allongée et amincie de manière à en faire une zone déformable qui autorise la jonction de telles extrémités 131 non alignées.

On notera aussi sur les figures 4 et 5 la présence de crans 68 formés à la surface intérieure des chambres 62, et agencés de manière à empêcher une extraction involontaire des extrémités des tiges 12 ou 13 hors des chambres 62. D'autres moyens de jonctions fonctionnellement équivalents pourront aussi être utilisés.

L'invention n'est pas limitée aux modes de réalisation décrits précédemment uniquement à titre d'exemple.

En particulier, une même tige en matériau isolant, en tant qu'élément de structure longitudinale pourrait aussi inclure plusieurs conducteurs électriques.

Egalement, le ou les conducteurs électriques ne sont pas nécessairement liés aux éléments de structure longitudinaux, ou intégrés à ceux-ci comme cela est présenté dans l'exemple décrit précédemment en lien avec la figure 2. Il peut par exemple suffire qu'ils soient reliés mécaniquement aux éléments de structure transversaux et isolés entre eux par lesdits éléments de structure transversaux.

Bien que l'invention ait été décrite ci-dessus uniquement en lien avec des chemins de câbles classiques, ayant une section de forme générale en U, elle peut être adaptée aussi à des échelles à câbles, ou toutes autres structures destinées principalement au supportage de câbles électriques, quelle que soit la forme de la section de telles structures.

## Revendications

1. Système de cheminement de câbles, comportant une structure porteuse rigide qui comprend des premiers éléments de structure longitudinaux (12, 13) et des deuxièmes éléments de structure (11,21) en matériau électriquement isolant reliant mécaniquement les éléments de structure longitudinaux, **caractérisé en ce qu'**il comporte au moins deux conducteurs électriques (3) s'étendant parallèlement selon la direction des éléments de structure longitudinaux et séparés par au moins des portions desdits deuxièmes éléments de structure, de manière à isoler les conducteurs électriques l'un de l'autre, et **en ce que** des moyens de connexion électrique (110, 210) sont disposés le long du cheminement de câble, de manière à permettre le raccordement d'un appareillage électrique (5) entre les conducteurs électriques.

2. Système de cheminement de câbles selon la revendication 1, **caractérisé en ce que** au moins certains des conducteurs électriques sont logés dans un ou plusieurs desdits éléments longitudinaux, réalisés en matériau électriquement isolant.

3. Système de cheminement de câbles selon la revendication 2, **caractérisé en ce que** les éléments de structure longitudinaux sont des tiges longitudinales (12, 13) en matériau électriquement isolant dans lesquelles les conducteurs électriques (3) sont logés.

4. Système de cheminement de câbles selon l'une quelconque des revendications 1 à 3, **caractérisé en ce que** la structure porteuse comporte deux longerons (1) reliés par des éléments de structure transversaux (21), au moins un des longerons comprenant au moins deux éléments de structure longitudinaux (12, 13) comportant des conducteurs électriques.

5. Système de cheminement de câbles selon l'une quelconque des revendications 1 à 3, **caractérisé en ce que** la structure porteuse a une section transversale en forme de U et les éléments de structure longitudinaux (12) comportant des conducteurs électriques sont situés dans le fond de ce U.

6. Système de cheminement de câbles selon la revendication 1, **caractérisé en ce que** les caractéristiques mécaniques et/ou dimensionnelles des conducteurs électriques (3) sont déterminées de manière à augmenter la résistance mécanique et la rigidité de la structure porteuse.

7. Système de cheminement de câbles selon la revendication 1, **caractérisé en ce qu'**au moins un des conducteurs électriques (3) est dénudé.

8. Système de cheminement de câbles selon l'une quelconque des revendications 1 à 3, **caractérisé en ce qu'**il comporte des moyens de jonction (6, 6') à continuité électrique pour relier électriquement les extrémités (121) des éléments longitudinaux (12, 13) de tronçons de structure porteuse assemblés bout à bout.

9. Système de cheminement de câbles selon la revendication 8, **caractérisé en ce que** les moyens de jonction à continuité électrique (6') présentent une partie médiane déformable (67).

10. Système de cheminement de câbles selon la revendication 2 ou 3, **caractérisé en ce que** les moyens de connexion électrique (110, 120) sont reliés électriquement aux conducteurs électriques par des poinçons traversant la matière isolante (4).

11. Système de cheminement de câbles selon l'une quelconque des revendications 1 à 3, **caractérisé en ce que** les moyens de connexion électrique (110, 120) sont formés sur certains des deuxièmes éléments de structure (11, 21) reliant les éléments de structure longitudinaux (12, 13).

12. Système de cheminement de câbles selon l'une quelconque des revendications 1 à 3, **caractérisé en ce que** les moyens de connexion électrique (110, 210) comportent plusieurs groupes (112, 212) de bornes de raccordement pour raccorder plusieurs appareillages électriques (5) sur le même moyen de connexion.
